(19)

**Europäisches Patentamt**
**European Patent Office**
**Office européen des brevets**

(11) **EP 3 648 025 B1**

(12) **FASCICULE DE BREVET EUROPEEN**

(45) Date de publication et mention
de la délivrance du brevet:
**23.08.2023 Bulletin 2023/34**

(51) Classification Internationale des Brevets (IPC):
***G06Q 10/08*** *(2023.01)*

(52) Classification Coopérative des Brevets (CPC):
**G06Q 10/08**

(21) Numéro de dépôt: **19203985.7**

(22) Date de dépôt: **18.10.2019**

(54) **PROCÉDÉ DE PILOTAGE EN MODE TRI D'UN SYSTÈME DE STOCKAGE TAMPON ET DE SÉQUENCEMENT DE CHARGES, ET UNITÉ DE PILOTAGE CORRESPONDANTE**

STEUERUNGSVERFAHREN EINES PUFFER- UND SEQUENZIERSYSTEMS ZUM SORTIEREN UND ENTSPRECHENDE STEUEREINHEIT

CONTROL METHOD OF BUFFER STORAGE AND LOAD SEQUENCING SYSTEM IN SORT MODE, AND CORRESPONDING DRIVE UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2018 FR 1860027**

(43) Date de publication de la demande:
**06.05.2020 Bulletin 2020/19**

(73) Titulaire: **Savoye**
**21000 Dijon (FR)**

(72) Inventeurs:
• **PIETROWICZ, Stéphane**
**21220 Fixin (FR)**
• **COLLIN, Jean-Michel**
**21190 Merceuil (FR)**
• **VACHER, Blandine**
**03340 NEUILLY-LE-RE AL (FR)**

(74) Mandataire: **Vidon Brevets & Stratégie**
**16B, rue de Jouanet**
**BP 90333**
**35703 Rennes Cedex 7 (FR)**

(56) Documents cités:
**FR-A1- 3 051 948**

• **Robert Sedgewick: "Priority Queues", , 29 décembre 2017 (2017-12-29), XP055601331, Extrait de l'Internet: URL:https://algs4.cs.princeton.edu/24pq/ [extrait le 2019-07-02]**

**Description**

## 1. DOMAINE TECHNIQUE

Le domaine de l'invention est celui de la logistique et des systèmes de stockage tampon et de séquencement de charges configurés pour recevoir des charges non séquencées provenant d'au moins une unité externe (par exemple un magasin automatisé de stockage/déstockage) et fournir au moins une séquence de charges dans un ordre voulu à au moins un poste de préparation.

La présente invention concerne plus précisément le pilotage d'un système de stockage tampon et de séquencement de charges (aussi appelé « buffer-séquenceur »), dans le cas où celui-ci comprend :

- une unité de stockage tampon comprenant une pluralité de niveaux d'entrée et au moins un niveau de recirculation superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, une charge présente sur le au moins un niveau de recirculation étant dite charge en recirculation ; et
- un élévateur d'entrée et un élévateur de sortie, de type alternatif et discontinu, positionnés respectivement en regard des entrées et en regard des sorties des niveaux d'entrée et du au moins un niveau de recirculation.

La présente invention peut s'appliquer à n'importe quel type de poste de préparation, et notamment mais non exclusivement :

- aux postes de préparation de commandes (aussi appelés « postes de picking »), par prélèvements de produits dans des contenants de stockage (aussi appelés « charges sources ») : un opérateur (ou un robot) reçoit une liste de prélèvements (sur papier, sur écran d'un terminal, sous forme vocale, sous forme de mission informatique (dans le cas du robot), etc.) lui indiquant, pour chaque colis à expédier (aussi appelé « contenant d'expédition » ou « charge cible »), la quantité de chaque type de produits qu'il doit collecter dans des contenants de stockage et regrouper dans le colis à expédier ; et
- aux postes de palettisation de contenants de stockage (aussi appelés « charges sources ») contenant eux-mêmes des produits : un opérateur (ou un robot) reçoit une liste de prélèvements (sur papier, sur écran d'un terminal, sous forme vocale, sous forme de mission informatique (dans le cas du robot), etc.) lui indiquant, pour chaque palette à expédier (aussi appelée « contenant d'expédition » ou « charge cible »), la quantité de chaque type de contenants de stockage (par exemple des cartons) qu'il doit collecter et décharger sur la palette à expédier.

## 2. ARRIÈRE-PLAN TECHNOLOGIQUE

La demande de brevet FR3051948A1, déposée par le titulaire de la présente demande (société SAVOYE), décrit plusieurs implémentations possibles d'un système de stockage tampon et de séquencement de charges du type précité, c'est-à-dire comprenant une unité de stockage tampon, comprenant elle-même N niveaux d'entrée et au moins un niveau de recirculation, ainsi qu'un élévateur d'entrée et un élévateur de sortie.

Le principe général d'un tel système consiste à effectuer les fonctions de stockage tampon et de séquencement de charges en utilisant deux élévateurs alternatifs (d'entrée et de sortie respectivement) en combinaison avec une unité de stockage tampon, sous le contrôle d'une unité de pilotage configurée pour organiser divers mouvements de charges entre ces entités. L'unité de pilotage UP veille notamment au respect d'une règle selon laquelle des charges présentes sur un même niveau d'entrée sont séquencées dans un ordre croissant de numéros d'ordre.

La capacité de séquencement (ordonnancement) du système est liée à la quantité de charges pouvant être stockées temporairement dans l'unité de stockage tampon. En permettant une recirculation (c'est-à-dire un retour vers l'élévateur alternatif d'entrée, et donc potentiellement vers l'entrée de l'unité de stockage tampon) de certaines charges qui sortent de l'unité de stockage tampon, le (au moins un) niveau de recirculation permet d'éviter une situation de blocage de l'unité de stockage tampon, sans en augmenter le nombre de niveaux d'entrée.

Par « unité externe» (qui fournit les charges non séquencées), on entend par exemple (liste non exhaustive) : un système automatique (par exemple un magasin automatisé de stockage/déstockage) ; un système semi-automatique ; un système manuel ; un autre système de stockage tampon et de séquencement de charges ; une combinaison d'au moins deux des systèmes précédents ; etc.

Un tel système présente de nombreux avantages, notamment mais non exclusivement :

- minimisation (voire dans certains cas suppression totale) des contraintes de séquencement en sortie de la (ou les) unité(s) externe(s) par un séquencement des charges en aval de celle(s)-ci, et au plus proche du (ou des) poste(s) de préparation ; cette minimisation (ou suppression) des contraintes permettant de réduire la taille et la complexité, et donc le coût, de la (ou les) unité(s) externe(s) ;

- réduction de l'emprise au sol ;
- optimisation du rendement du système global (comprenant notamment la (ou les) unité(s) externe(s), le système de stockage tampon et de séquencement et le(s) poste(s) de préparation) ;
- optimisation de la réactivité du système global ;
- manipulation de charges multi-formats si des rouleaux motorisés sont utilisés ;
- optimisation des coûts si le système global comprend plusieurs postes de préparation (mutualisation du système de stockage tampon et de séquencement) ;
- etc.

En sortie du système de stockage tampon et de séquencement, plusieurs types de séquences de charges sont réalisables, et notamment mais non exclusivement :

- une séquence comprenant uniquement des charges sources, chaque charge source étant un contenant de stockage de produit(s) ; ou
- une séquence comprenant uniquement des charges cibles, chaque charge cible étant un contenant d'expédition de produit(s) ; ou
- une séquence comprenant une charge cible, qui est un contenant d'expédition de produit(s), suivie d'au moins une charge source, qui est un contenant de stockage de produit(s).

Plusieurs systèmes de stockage tampon et de séquencement (réalisés chacun selon la solution proposée) peuvent être utilisés en parallèle. Par exemple, en amont d'au moins un poste de préparation, un premier système est utilisé uniquement pour des charges sources, et en parallèle un second système est utilisé uniquement pour des charges cibles.

Il est apparu souhaitable aux inventeurs de la présente demande d'optimiser le pilotage d'un système de stockage tampon et de séquencement de charges tel que décrit dans la demande de brevet FR3051948A1.

Ils ont identifié plusieurs axes d'optimisation relatifs en particulier au pilotage de l'élévateur d'entrée, avec notamment une recherche de solution aux problématiques suivantes, tout en gérant un compromis entre d'une part une augmentation du débit des charges séquencées sortant sur le convoyeur de sortie et d'autre part une réduction des risques de blocage du système :

- sélection d'une charge : comment choisir entre les charges qui arrivent à l'élévateur d'entrée via le convoyeur d'entrée et les charges en recirculation qui arrivent à l'élévateur d'entrée via le niveau de recirculation ?
- sélection d'un niveau de destination : une fois qu'une charge a été choisie, comment choisir parmi les niveaux d'entrée le niveau de destination sur lequel la charge doit être transférée par l'élévateur d'entrée, tout en veillant au respect de la règle précitée selon laquelle des charges présentes sur un même niveau d'entrée sont séquencées dans un ordre croissant de numéros d'ordre ?
- sélection d'un niveau à recirculer : dans le cas où il n'est pas possible de choisir un niveau de destination tout en veillant au respect de la règle précitée, comment choisir parmi les niveaux d'entrée un niveau à recirculer (c'est-à-dire un niveau dont les charges qu'il héberge vont devoir être transférées par l'élévateur de sortie vers le niveau de recirculation) ?

L'invention, dans au moins un mode de réalisation, a notamment pour objectif de fournir un procédé de pilotage d'un système de stockage tampon et de séquencement de charges, offrant une solution aux problématiques mentionnées ci-dessus (ou à moins une d'entre elles), tout en gérant le compromis précité (entre augmentation du débit de sortie des charges séquencées et réduction des risques de blocage du système).

## 3. RÉSUMÉ

Dans un mode de réalisation particulier de l'invention, il est proposé un procédé de pilotage d'un système de stockage tampon et de séquencement de charges, configuré pour recevoir des charges non séquencées provenant d'au moins une unité externe, via au moins un convoyeur d'entrée, et fournir au moins une séquence de charges dans un ordre voulu à au moins un poste de préparation, via au moins un convoyeur de sortie. Le système comprend :

- une unité de stockage tampon comprenant N niveaux d'entrée et au moins un niveau de recirculation superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec N≥2, une charge présente sur le au moins un niveau de recirculation étant dite charge en recirculation ; et

- un élévateur d'entrée et un élévateur de sortie, de type alternatif et discontinu, positionnés respectivement en regard des entrées et en regard des sorties des N niveaux d'entrée et du au moins un niveau de recirculation.

Une unité de pilotage effectue un pilotage itératif de l'élévateur d'entrée comprenant à chaque itération les étapes suivantes, même s'il existe au moins une charge à recirculer dans le système :

- détection d'une première charge sur une sortie du convoyeur d'entrée et d'une deuxième charge sur la sortie du au moins un niveau de recirculation ;
- sélection, d'une charge avec les règles suivantes : sélection de la première charge si pas de deuxième charge présente, ou inversement ; si les première et deuxième charges sont présentes, sélection de la deuxième charge si au moins une condition de priorité est vérifiée, sinon sélection de la première charge ;
- sélection d'un niveau de destination parmi les niveaux d'entrée, en respectant une règle selon laquelle des charges présentes sur un même niveau d'entrée, hormis d'éventuelle(s) charge(s) à recirculer, sont séquencées dans un ordre croissant de numéros d'ordre ;
- si la sélection d'un niveau de destination aboutit, génération pour l'élévateur d'entrée d'une mission de transfert de la charge sélectionnée sur l'entrée du niveau de destination sélectionné, sinon sélection d'un niveau à recirculer parmi les niveaux d'entrée, sans génération pour l'élévateur d'entrée d'une mission de transfert de la charge sélectionnée sur l'entrée du niveau à recirculer sélectionné, et affectation à chaque charge du niveau à recirculer d'un statut de charge à recirculer signifiant que ladite charge doit être transférée par l'élévateur de sortie sur l'entrée du au moins un niveau de recirculation.

Le principe général de la solution proposée consiste à effectuer un pilotage itératif de l'élévateur d'entrée dans lequel, afin de favoriser la réduction des risques de blocage par rapport à l'augmentation du débit de sortie des charges séquencées (dans la gestion du compromis précité), on améliore le pouvoir de tri des charges à recirculer et des charges en recirculation (ce faisant on améliore le pouvoir de tri de l'ensemble du système) :

- en cherchant à générer une mission de transfert pour l'élévateur d'entrée même s'il existe au moins une charge à recirculer dans le système ; et
- en privilégiant quand c'est possible (c'est-à-dire si la au moins une condition de priorité est vérifiée), dans la sélection de charge en entrée de l'élévateur d'entrée, les charges en recirculation provenant du au moins un niveau de recirculation.

Par ailleurs, la sélection d'un niveau à recirculer (dans une itération donnée du pilotage itératif) est associée à l'affectation du statut « charge à recirculer » à chaque charge du niveau à recirculer, mais n'implique pas la génération pour l'élévateur d'entrée d'une mission de transfert de la charge sélectionnée sur l'entrée du niveau à recirculer sélectionné. Ainsi, on utilise l'itération suivante du pilotage itératif pour générer une telle mission de transfert, ce qui permet d'optimiser le choix du niveau d'entrée sur lequel la prochaine charge sélectionnée va être placée.

On décrit par la suite, en relation avec les figures, diverses caractéristiques du processus de sélection de niveau de destination et du processus de sélection d'un niveau à recirculer, permettant d'améliorer encore le pouvoir de tri des charges à recirculer et des charges en recirculation, et donc de réduire encore les risques de blocage du système.

Diverses implémentations et caractéristiques du procédé de pilotage proposé sont précisées dans le jeu de revendications. Elles sont également détaillées (avec leurs avantages associés) et illustrées à travers des exemples dans la suite de la description.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé une unité de pilotage d'un système de stockage tampon et de séquencement de charges, configuré pour recevoir des charges non séquencées provenant d'au moins une unité externe, via au moins un convoyeur d'entrée, et fournir au moins une séquence de charges dans un ordre voulu à au moins un poste de préparation, via au moins un convoyeur de sortie, le système comprenant :

- une unité de stockage tampon comprenant N niveaux d'entrée et au moins un niveau de recirculation superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec N≥2, une charge présente sur le au moins un niveau de recirculation étant dite charge en recirculation ; et
- un élévateur d'entrée et un élévateur de sortie, de type alternatif et discontinu, positionnés respectivement en regard des entrées et en regard des sorties des N niveaux d'entrée et du au moins un niveau de recirculation.

Ladite unité de pilotage est configurée pour effectuer un pilotage itératif de l'élévateur d'entrée selon le procédé de pilotage (selon l'un quelconque de ses modes de réalisation décrits plus bas).

## 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 est une vue de côté d'un système de stockage tampon et de séquencement de charges selon un mode de réalisation particulier de l'invention ;
- la figure 2 présente un organigramme du pilotage de l'élévateur d'entrée, selon un mode de réalisation particulier de l'invention ;
- la figure 3 présente un organigramme du pilotage de l'élévateur de sortie, selon un mode de réalisation particulier de l'invention ; et
- la figure 4 présente un schéma-bloc d'une unité de pilotage selon un mode de réalisation particulier de l'invention.

## 5. DESCRIPTION DÉTAILLÉE

Sur toutes les figures du présent document, les éléments et étapes identiques sont désignés par une même référence numérique.

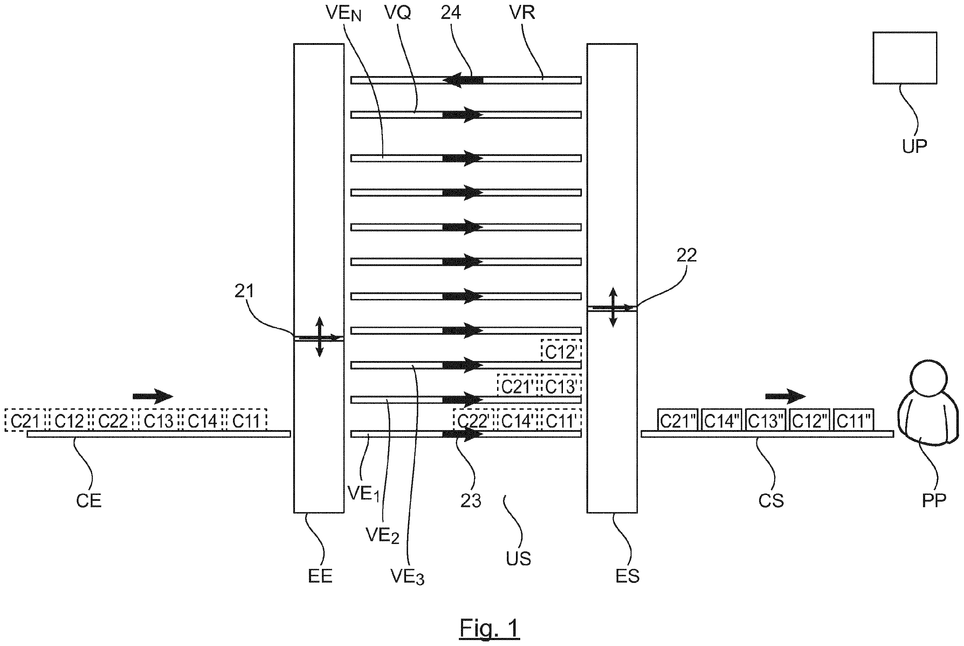

La **figure 1** illustre un système de stockage tampon et de séquencement de charges selon un mode de réalisation particulier de l'invention. Il est configuré pour recevoir des charges non séquencées provenant d'une unité externe (non représentée), via un convoyeur d'entrée CE, et fournir au moins une séquence de charges dans un ordre voulu (charges séquencées) à un poste de préparation PP (occupé par un opérateur ou un robot), via un convoyeur de sortie CS.
En d'autres termes, le système (ou « buffer-séquenceur ») trie des charges en fonction d'une liste d'attendus en sortie et des charges qu'il découvre en entrée.
La liste des attendus en sortie est fournie à l'unité de pilotage UP. Elle comprend des couples associant un numéro d'ordre et un identifiant de charge. La liste des attendus en sortie fournit donc une liste de numéros d'ordre, qui est obligatoirement croissante non stricte (mais non nécessairement continue). Exemples de liste de numéros d'ordre :

- exemple 1 : 1, 2, 3, 4, 5, 6, 7, 8 ;
- exemple 2 : 1,1,2,3,4,4,4,4,5,6,7,8,8,9,9,10 ;
- exemple 3 : 1, 1, 2, 3, 6, 7, 8, 8, 10.

Le prochain numéro de la liste des attendus en sortie est le premier de la liste, ayant donc la valeur la plus faible.
Quand une charge a été traitée (déposée sur le convoyeur de sortie), son numéro d'ordre est enlevé de la liste. Actualisation des exemples précédents de liste de numéros d'ordre, en supposant qu'une charge ayant le numéro d'ordre 1 a été déposée sur le convoyeur de sortie :

- exemple 1 : 2, 3, 4, 5, 6, 7, 8 ;
- exemple 2 : 1,2,3,4,4,4,4,5,6,7,8,8,9,9,10 ;
- exemple 3 : 1,2,3,6,7,8,8,10.

L'unité externe est par exemple un magasin automatisé de stockage/déstockage. Dans une variante, l'unité externe est un autre système de stockage tampon et de séquencement de charges. Dans une autre variante, le système de stockage tampon et de séquencement de charges reçoit des charges non séquencées provenant de plusieurs unités externes (soit via plusieurs convoyeurs d'entrée CE spécifiques chacun à une des unités externes, soit via un convoyeur d'entrée CE utilisé conjointement par plusieurs unités externes).
Le système de stockage tampon et de séquencement de charges comprend un élévateur d'entrée EE, un élévateur de sortie ES, une unité de stockage tampon US et une unité de pilotage UP.
Les élévateurs d'entrée EE et de sortie ES sont des élévateurs verticaux de type alternatif et discontinu, comprenant chacun une unique nacelle 21, 22 effectuant des mouvements verticaux alternatifs (la nacelle monte et descend alternativement). Par opposition, un « élévateur continu » (aussi appelé « patemoster ») est un élévateur vertical comprenant une pluralité de nacelles circulant en boucle fermée, sans mouvement alternatif. L'unique nacelle 21, 22 est mono-charge (elle comporte un unique niveau comprenant un unique emplacement configuré pour recevoir une charge). Ainsi les élévateurs EE, ES sont simples et de faible coût.

L'unique emplacement de nacelle est par exemple équipé d'une section de convoyeur motorisé (ou de tout autre dispositif de transfert) permettant de transférer une charge sur ou en dehors de la nacelle. Dans une variante, l'emplacement de nacelle est équipé de rouleaux libres, dont la mise en mouvement est par exemple assurée par un moyen mécanique escamotable positionné en bout d'un autre équipement (convoyeur ou emplacement tampon). D'autres moyens de mise en mouvement peuvent être envisagés.

Dans une autre variante, l'unique nacelle de chaque élévateur EE, ES est multicharge (elle comporte plusieurs niveaux et/ou plusieurs emplacements de charge par niveau).

Dans une autre variante, les élévateurs EE, ES sont des élévateurs verticaux de type alternatif et discontinu, comprenant chacun plusieurs nacelles effectuant chacune des mouvements verticaux alternatifs (la nacelle monte et descend alternativement). Chaque nacelle comprend un ou plusieurs niveaux et/ou un plusieurs emplacements de charge par niveau.

L'unité de stockage tampon US comprend :

- N niveaux d'entrée $VE_1$ à $VE_N$, superposés verticalement, ayant chacun une entrée unique et une sortie unique, et comprenant chacun un convoyeur de type « premier entré premier sorti » (ou FIFO, pour « First In First Out ») selon un premier sens (indiqué sur la figure 1 par des flèches noires orientées de gauche à droite, notamment celle référencée 23), avec $N \geq 2$ (par exemple, N=9 dans une mise en oeuvre particulière). Chaque niveau d'entrée déplace automatiquement les charges de l'amont (côté élévateur d'entrée) vers l'aval (côté élévateur de sortie). Chaque niveau d'entrée comprend un convoyeur d'avance automatique pas à pas, permettant d'avancer automatiquement les charges jusqu'à une position d'attente avant prise par l'élévateur de sortie. Il peut ainsi y avoir Y charges au maximum dans un niveau ;

- un niveau de recirculation VR, superposé verticalement avec les niveaux d'entrée, ayant une entrée unique et une sortie unique, et comprenant un convoyeur de type « premier entré premier sorti » selon un deuxième sens (indiqué sur la figure 1 par une flèche noire orientée de droite à gauche et référencée 24) opposé au premier sens. Chaque charge présente sur le niveau de recirculation VR est dite « charge en recirculation ». Le niveau de recirculation déplace automatiquement les charges de l'aval (côté élévateur de sortie) vers l'amont (côté élévateur d'entrée). Le niveau de recirculation VR est positionnable à n'importe quel étage (dans un mode de réalisation particulier, il est positionné verticalement au centre de la superposition de niveaux d'entrée, afin de limiter les déplacements de l'élévateur de sortie). Dans une variante, l'unité de stockage tampon US comprend plusieurs niveaux de recirculation ;

- (optionnellement) un niveau « voie rapide » VQ, superposé verticalement avec les niveaux d'entrée $VE_1$ à $VE_N$ et le niveau de recirculation VR, ayant une entrée unique et une sortie unique, et comprenant un convoyeur de type « premier entré premier sorti » selon le premier sens. Le niveau voie rapide est réservé aux charges en retard, pour leur permettre d'être prise au plus vite par l'élévateur de sortie.

L'élévateur d'entrée EE et l'élévateur de sortie ES sont positionnés respectivement en entrée et en sortie des N niveaux d'entrée $VE_1$ à $VE_N$, du niveau de recirculation VR et du niveau « voie rapide » VQ de l'unité de stockage tampon US. La nacelle 21 de l'élévateur d'entrée EE peut venir en regard de l'entrée de chacun des N niveaux d'entrée et du niveau « voie rapide » VQ de l'unité de stockage tampon US pour y insérer une charge. Elle peut également venir en regard de la sortie du niveau de recirculation VR pour en retirer une charge.

La nacelle 22 de l'élévateur de sortie ES peut venir en regard de la sortie de chacun des N niveaux d'entrée et du niveau « voie rapide » VQ de l'unité de stockage tampon US pour en retirer une charge. Elle peut également venir en regard de l'entrée du niveau de recirculation VR pour y insérer une charge.

Le convoyeur d'entrée CE occupe une position permettant un échange direct de charges avec l'élévateur d'entrée EE. En d'autres termes, une charge peut passer directement de l'un à l'autre. Dans l'exemple de la figure 1, l'élévateur d'entrée EE est positionné entre le convoyeur d'entrée CE et l'unité de stockage tampon US, et le convoyeur d'entrée CE est aligné verticalement avec le niveau d'entrée référencé $VE_1$ de l'unité de stockage tampon US. Dans des variantes, le convoyeur d'entrée CE peut occuper d'autres positions verticales, et notamment être aligné verticalement avec l'un quelconque des N niveaux d'entrée $VE_1$ à $VE_N$ de l'unité de stockage tampon US, ou encore avec le niveau « voie rapide » VQ ou le niveau de recirculation VR. Dans d'autres variantes, le convoyeur d'entrée CE et l'unité de stockage tampon US sont positionnés du même côté de l'élévateur d'entrée EE (dans ce cas, le convoyeur d'entrée CE est positionné au-dessus ou au-dessous de l'unité de stockage tampon US). Dans d'autres variantes, on peut avoir plusieurs convoyeurs d'entrée CE, en accord avec toutes les variantes précédentes.

Le convoyeur de sortie CS occupe une position permettant un échange direct de charges avec l'élévateur de sortie ES. En d'autres termes, une charge peut passer directement de l'un à l'autre. Dans l'exemple de la figure 1, l'élévateur de sortie ES est positionné entre l'unité de stockage tampon US et le convoyeur de sortie CS, et le convoyeur de sortie CS est aligné verticalement avec le niveau d'entrée référencé $VE_1$ de l'unité de stockage tampon US. Dans des variantes, le convoyeur de sortie CS peut occuper d'autres positions verticales, et notamment être aligné verticalement avec l'un quelconque des N niveaux d'entrée $VE_1$ à $VE_N$ de l'unité de stockage tampon US, ou encore avec le niveau « voie rapide » VQ ou le niveau de recirculation VR. Dans d'autres variantes, le convoyeur de sortie CS et l'unité de stockage tampon US sont positionnés du même côté de l'élévateur de sortie ES (dans ce cas, le convoyeur de sortie CS est positionné au-dessus ou au-dessous de l'unité de stockage tampon US). Dans d'autres variantes, on peut avoir plusieurs convoyeurs de sortie CS, en accord avec toutes les variantes précédentes.

L'unité de pilotage UP permet d'organiser de façon optimale les mouvements des charges dans le système, et notamment sur les élévateurs d'entrée EE et de sortie ES et l'unité de stockage tampon US, afin de mettre à disposition sur le convoyeur de sortie CS des charges sources selon au moins une séquence déterminée (comportant des charges dans un ordre voulu). A cet effet, l'unité de pilotage UP reçoit des informations (notamment un identifiant de charge) lues, sur les charges passant à différents endroits du système, par des dispositifs de lecture (non représentés), de type lecteur code à barre, lecteur d'étiquette RFID, etc. Ces endroits sont par exemple situés aux extrémités des différents convoyeurs.

Plus précisément, l'unité de pilotage UP organise, sous la contrainte précitée de délivrance d'au moins une séquence déterminée, différents mouvements de charges :

- depuis le convoyeur d'entrée CE vers l'élévateur d'entrée EE ;
- depuis l'élévateur d'entrée EE vers les N niveaux d'entrée de l'unité de stockage tampon US ;
- depuis l'élévateur d'entrée EE vers le niveau « voie rapide » VQ de l'unité de stockage tampon US ;
- depuis les N niveaux d'entrée de l'unité de stockage tampon US vers l'élévateur de sortie ES ;
- depuis le niveau « voie rapide » VQ de l'unité de stockage tampon US vers l'élévateur de sortie ES ;
- depuis l'élévateur de sortie ES vers le convoyeur de sortie CS ;
- depuis l'élévateur de sortie ES vers le niveau de recirculation VR ; et
- depuis le niveau de recirculation VR vers l'élévateur d'entrée EE.

L'élévateur d'entrée EE et l'élévateur de sortie ES fonctionnent simultanément, ce qui permet d'augmenter la cadence du système de stockage tampon et de séquencement.

Pour que le système fournisse une séquence de charges dans un ordre voulu, l'unité de pilotage UP effectue :

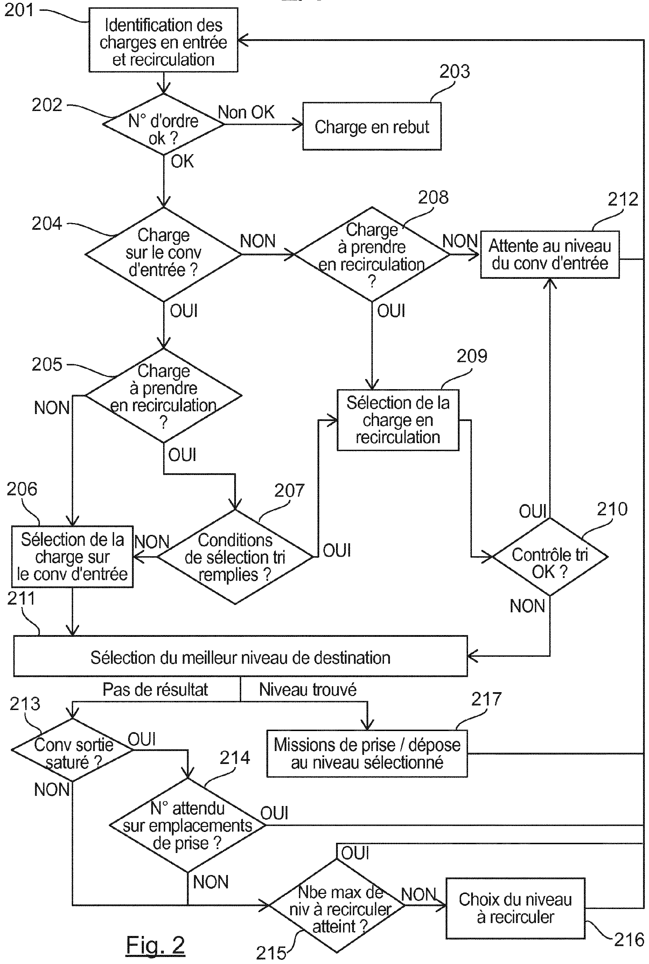

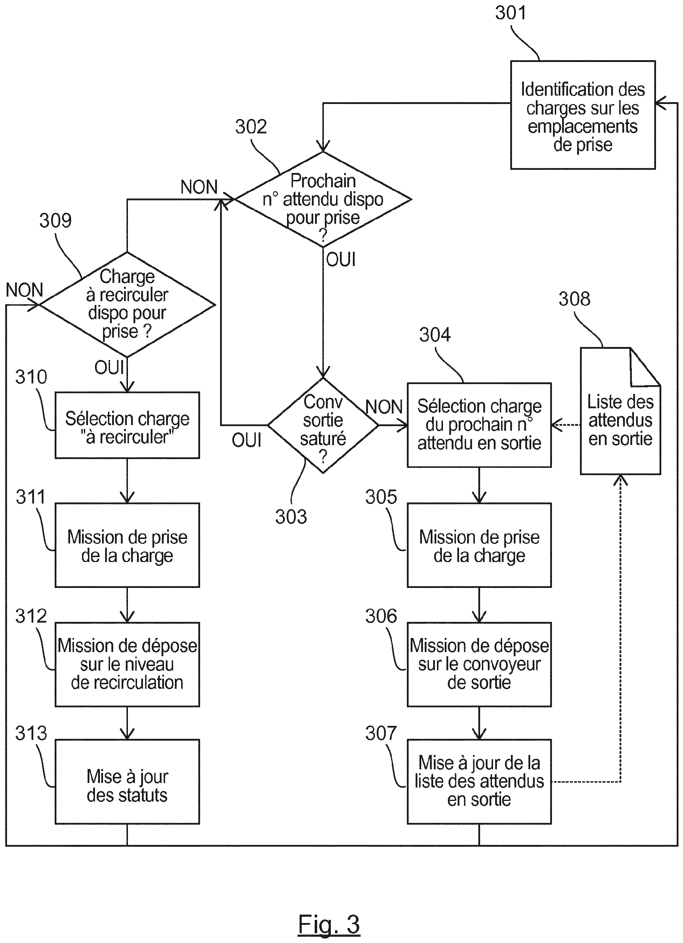

- un pilotage itératif de l'élévateur d'entrée (voir figure 2), de sorte que celui-ci effectue un pré-séquencement quand il place les charges de la séquence en entrée des niveaux d'entrée $VE_1$ à $VE_N$ et du niveau « voie rapide » VQ de l'unité de stockage tampon US. Pour cela, l'unité de pilotage UP veille notamment au respect d'une règle selon laquelle des charges présentes sur un même niveau d'entrée (hormis d'éventuelle(s) charge(s) à recirculer) sont séquencées dans un ordre croissant de numéros d'ordre. En d'autres termes, sur chacun des N niveaux d'entrée, une charge donnée possédant un rang donné au sein de la séquence ne doit être précédée d'aucune charge (hormis d'éventuelle(s) charge(s) à recirculer) de rang strictement supérieur au rang donné (plusieurs charges peuvent avoir le même rang au sein de la séquence) ; et
- un pilotage itératif de l'élévateur de sortie (voir figure 3), de sorte que celui-ci effectue un séquencement final quand il prélève les charges de la séquence en sortie des N niveaux d'entrée $VE_1$ à $VE_N$ et du niveau « voie rapide » VQ de l'unité de stockage tampon US, selon l'ordre voulu.

En d'autres termes, la fonction de séquencement (ordonnancement) est répartie entre l'élévateur d'entrée EE (qui effectue le pré-séquencement) et l'élévateur de sortie ES (qui effectue le séquencement final et participe au pré-séquencement). Ceci permet au système de stockage tampon et de séquencement de charges de fonctionner à une cadence élevée (directement liée à la cadence de travail des élévateurs d'entrée et de sortie).

Ainsi, dans l'exemple illustré sur la figure 1, on considère que la séquence à reconstituer sur le convoyeur de sortie CS comprend dans l'ordre les charges suivantes : C11, C12, C13, C14 et C21. L'élévateur d'entrée EE reçoit les charges dans le désordre (C11, C14, C13, C22, C12 et C21). Il effectue un pré-séquencement en effectuant les actions successives suivantes :

- placement de la charge C11 sur le niveau d'entrée $VE_1$ ;
- placement de la charge C14 sur le niveau d'entrée $VE_1$ ;
- placement de la charge C13 sur le niveau d'entrée $VE_2$ (pas possible de la placer sur le niveau d'entrée $VE_1$ car la charge C14 s'y trouve déjà) ;
- placement de la charge C22 sur le niveau d'entrée $VE_1$ ;

- placement de la charge C12 sur le niveau d'entrée $VE_3$ (pas possible de la placer sur le niveau d'entrée $VE_1$ car les charges C14 et C22 s'y trouvent déjà, ni sur le niveau d'entrée $VE_2$ car la charge C13 s'y trouve déjà) ;
- placement de la charge C21 sur le niveau d'entrée $VE_2$ (pas possible de la placer sur le niveau d'entrée $VE_1$ car la charge C22 s'y trouve déjà).

Sur la figure 1, des charges sont référencées avec des caractères alphanumériques (« C11 », « C12 », « C13 », etc.) pour illustrer le fonctionnement du système. Afin de faire apparaître sur la même figure des positions successives d'une même charge, la notation suivante est utilisée : pour une première position, la charge est référencée seulement avec ses caractères alphanumériques associés (par exemple « C11 »), pour une deuxième position, la référence de la charge est complétée avec le symbole prime (par exemple « C11' »), pour une troisième position, la référence de la charge est référencée avec le symbole double prime (par exemple « C11" »), etc.

En cas d'impossibilité pour l'élévateur d'entrée EE de déposer une charge sur un niveau d'entrée, l'unité de pilotage UP recherche et sélectionne un niveau à recirculer parmi les niveaux d'entrée. Le niveau d'entrée sélectionné a alors le statut « à recirculer », et les charges sur ce niveau ont le statut « à recirculer ». Une charge « à recirculer » passe au statut « en recirculation » lorsqu'elle est déposée sur le niveau de recirculation VR par l'élévateur de sortie ES. Le nombre maximal de niveau(x) d'entrée pouvant avoir le statut « à recirculer » en simultané est prédéfini. Dans un mode de réalisation particulier, ce nombre maximal est égal à N (le nombre de niveaux d'entrée), afin d'améliorer le pouvoir de tri des charges à recirculer et des charges en recirculation.

Dans un mode de réalisation particulier, une voie de rebut est implantée, soit en entrée, soit en sortie de l'unité de stockage tampon US, pour traiter les anomalies, aussi appelées « charges en rebut » : charge non attendue, charge non lue, etc. Les charges en rebut sont donc soit directement sorties par l'élévateur d'entrée, soit convoyées sur un niveau d'entrée pour être évacuée par l'élévateur de sortie. Une charge en rebut ne peut pas prendre le statut « à recirculer ».

La **figure 2** présente un organigramme du pilotage de l'élévateur d'entrée par l'unité de pilotage UP, selon un mode de réalisation particulier de l'invention. C'est un pilotage itératif comprenant à chaque itération les étapes détaillées ci-après, même s'il existe au moins une charge à recirculer dans le système.

Hormis pour les saturations de niveaux, les charges ayant le statut « rebut » ne sont pas prises en compte. Par exemple, si une charge « rebut » est la charge la plus en amont d'un niveau (c'est-à-dire la plus proche de l'élévateur d'entrée), c'est le numéro d'ordre de la charge qui la précède (immédiatement en aval) qui sera pris en compte pour définir NumDerCharge.

Dans une étape initiale 201, l'unité de pilotage détecte et identifie les charges éventuellement présentes sur les positions de prise par l'élévateur d'entrée : position de prise sur la sortie du convoyeur d'entrée CE et position de prise sur la sortie du niveau de recirculation VR.

Dans une étape de test 202, l'unité de pilotage récupère le numéro d'ordre des charges détectées et identifiées dans l'étape 201, et vérifie qu'ils sont bien présents dans la liste d'attendus en sortie. Si le numéro d'ordre d'une charge détectée n'est pas dans la liste d'attendus en sortie, la charge est mise en rebut dans une étape 203. Sinon passage à l'étape de test 204 (charge présente sur la sortie du convoyeur d'entrée ?), combinée à l'une des étapes de test identiques 205 et 208 (charge présente sur la sortie du niveau de recirculation ?), pour déterminer dans quel cas on se trouve parmi quatre cas possible :

- cas 1 : pas de charge présente sur la sortie du convoyeur d'entrée ni sur la sortie du niveau de recirculation (réponses négatives aux tests 204 et 208) ;
- cas 2 : charge présente sur la sortie du convoyeur d'entrée et pas de charge présente sur la sortie du niveau de recirculation (réponse positive au test 204 et négative au test 205) ;
- cas 3 : pas de charge présente sur la sortie du convoyeur d'entrée et charge présente sur la sortie du niveau de recirculation (réponse négative au test 204 et positive au test 208) ;
- cas 4 : charge présente sur la sortie du convoyeur d'entrée et charge présente sur la sortie du niveau de recirculation (réponses positives aux tests 204 et 205).

Dans le cas 1, l'unité de pilotage passe à l'étape 212 dans laquelle l'élévateur d'entrée est mis en attente (par exemple devant la sortie du convoyeur d'entrée), puis revient à l'étape initiale 201.

Dans le cas 2, l'unité de pilotage passe à l'étape 206, dans laquelle la charge présente sur la sortie du convoyeur d'entrée est sélectionnée, puis à l'étape 211 de sélection d'un niveau de destination parmi les niveaux d'entrée.

Dans le cas 3, l'unité de pilotage passe à l'étape 209 dans laquelle la charge présente sur la sortie du niveau de recirculation est sélectionnée.

Dans le cas 4, l'unité de pilotage passe à l'étape de test 207 dans laquelle elle détecte si au moins une des conditions de priorité suivantes est vérifiée :

- le numéro d'ordre de la charge présente sur la sortie du niveau de recirculation est inférieur au numéro d'ordre de la charge présente sur la sortie du convoyeur d'entrée ;
- le niveau de recirculation comprend des charges en recirculation qui ne sont pas séquencées dans un ordre croissant de numéros d'ordre ;
- le niveau de recirculation est plein et il y a besoin d'une place pour y placer une charge ;
- il existe dans le système au moins une charge à recirculer ou en recirculation avec un numéro d'ordre inférieur au numéro d'ordre de la charge présente sur la sortie du convoyeur d'entrée ;
- il existe dans le système au moins une charge à recirculer avec un numéro d'ordre inférieur au numéro d'ordre de la dernière charge placée dans le niveau de recirculation (c'est-à-dire la charge de ce niveau la plus près de l'élévateur d'entrée).

En cas de réponse positive à l'étape de test 207, l'unité de pilotage passe à l'étape 209 dans laquelle la charge présente sur la sortie du niveau de recirculation est sélectionnée. Sinon, l'unité de pilotage passe à l'étape 206 dans laquelle la charge présente sur la sortie du convoyeur d'entrée est sélectionnée.

A l'issue de l'étape 209, l'unité de pilotage effectue une étape de test 210 dans laquelle elle détecte si les conditions de tri suivantes sont vérifiées :

- le numéro d'ordre de la charge présente sur la sortie du niveau de recirculation est strictement supérieur au numéro d'ordre de la charge en $(N.Y/k)^{\text{ème}}$ place dans la liste d'attendus en sortie, avec N le nombre de niveaux d'entrée, Y la capacité de charges de chaque niveau d'entrée et $1/3 \leq k \leq 2/3$ (par exemple, k=2) ; et
- les charges en recirculation sur le au moins un niveau de recirculation sont séquencées dans un ordre croissant de numéros d'ordre.

En cas de réponse positive à l'étape de test 210 (c'est-à-dire si les deux conditions de tri sont vérifiées), l'unité de pilotage passe à l'étape 212 dans laquelle l'élévateur d'entrée est mis en attente (par exemple devant la sortie du convoyeur d'entrée), puis revient à l'étape initiale 201. Sinon, l'unité de pilotage passe à l'étape 211 de sélection d'un niveau de destination parmi les niveaux d'entrée.

Dans l'étape 211, l'unité de pilotage cherche à sélectionner un niveau de destination parmi les niveaux d'entrée, en respectant la règle précitée selon laquelle des charges présentes sur un même niveau d'entrée (hormis d'éventuelle(s) charge(s) à recirculer) sont séquencées dans un ordre croissant de numéros d'ordre.

Si le niveau « voie rapide » VQ est implémenté, l'unité de pilotage le sélectionne directement si une des conditions suivantes est respectée :

- le numéro d'ordre de la charge sélectionnée est celui du prochain numéro d'ordre de la liste d'attendus en sortie ;
- le numéro d'ordre de la charge sélectionnée est celui directement attendu après le numéro d'ordre de la dernière charge placée dans le niveau « voie rapide » (c'est-à-dire celle la plus près de l'élévateur d'entrée).

Dans un mode de réalisation particulier, l'étape 211 de sélection d'un niveau de destination comprend en outre l'attribution d'une note à chacun des niveaux d'entrée (avec un jeu de règles de notation détaillé ci-après) puis la sélection du niveau d'entrée ayant obtenu la note (positive) la plus élevée.

En cas d'égalité entre plusieurs niveaux d'entrée ayant la même note, l'unité de pilotage privilégie par exemple le premier niveau d'entrée en suivant un ordre de parcours des niveaux d'entrée, défini dans un paramétrage qui dépend de la configuration physique du système.

Dans une implémentation particulière, le jeu de règles de notation comprend, pour affecter une note à un niveau d'entrée donné :

- initialisation de la note à zéro ;
- si le niveau d'entrée donné est saturé, décrémentation de la note d'une valeur C0 ;
- si le niveau d'entrée donné est vide :

  * si la charge sélectionnée est une charge en recirculation, incrémentation de la note d'une valeur C1 ;
  * si le numéro d'ordre de la charge sélectionnée est strictement supérieur au numéro d'ordre de la charge en $(N.Y)^{\text{ème}}$ place dans une liste d'attendus en sortie, avec Y la capacité de charges de chaque niveau d'entrée, et que soit le au moins un niveau de recirculation est vide soit la dernière charge entrée dans le au moins un niveau de recirculation possède un numéro d'ordre inférieur ou égal au numéro d'ordre de la charge sélectionné, incrémentation de la note d'une valeur C2, sinon incrémentation de la note d'une valeur C3;

- si NumDerCharge $\leq$ NumCharge, avec NumDerCharge le numéro d'ordre de la dernière charge placée sur le niveau d'entrée donné et NumCharge le numéro d'ordre de la charge sélectionnée :

* si la différence, dans la liste d'attendus en sortie, entre la place i de la première charge ayant le numéro d'ordre NumCharge, et la place j de la première charge ayant le numéro d'ordre NumDerCharge, est strictement inférieure à Z (avec Z un nombre entier positif prédéterminé ; dans une implémentation particulière : Z = Y, avec Y la capacité de charges de chaque niveau d'entrée), incrémentation de la note d'une valeur C4 ;
* sinon incrémentation de la note d'une valeur C5 ;

- si la dernière charge placée sur le niveau d'entrée donné est une charge à recirculer, si le niveau d'entrée donné n'est pas vide, et si NumDerCharge > NumCharge, incrémentation de la note d'une valeur C6 ;

avec :

$$C1 < C3 < C2 \; ; \; C5 \le C2 \; ; \; C5 < C4 \; ; \; C2 < C0 \; ; \; C4 < C0 \; ; \; C6 < C3.$$

Dans une implémentation particulière, on a :

-

$$C4 = C7 - (NumCharge - NumDerCharge) + Y \; ;$$

et

-

$$C5 = C8 - (NumCharge - NumDerCharge) \; ;$$

avec C7 > C8 (par exemple, C7 = C2 +1 et C8 = C2).

Dans une implémentation particulière, on a : C0 = 10 000 000 ; C1 = 1 000 ; C2 = 2 000 000 ; C3 = 10 000 ; C4 = 2 000 001 - (NumCharge - NumDerCharge) + Y ; C5 = 2 000 000 - (NumCharge - NumDerCharge) ; C6 = 1 000.

Dans une implémentation particulière de l'étape 211, le niveau de destination sélectionné prend le statut d'un niveau à recirculer et la charge sélectionnée (qui à l'étape 217 va être déposée sur le niveau de destination sélectionné) prend le statut d'une charge à recirculer (afin d'être transférée sur l'entrée du au moins un niveau de recirculation par l'élévateur de sortie) si les conditions suivantes sont vérifiées :

- le niveau de destination sélectionné est vide ;
- le numéro d'ordre de la charge sélectionnée est strictement supérieur au numéro d'ordre de la charge en $(N.Y)^{ème}$ place dans la liste d'attendus en sortie, avec Y la capacité de charges de chaque niveau d'entrée ; et
- soit le niveau de recirculation est vide, soit la dernière charge placée sur le niveau de recirculation possède un numéro d'ordre inférieur au numéro d'ordre de la charge sélectionnée.

Si l'étape 211 a abouti (c'est-à-dire si un niveau de destination a pu être sélectionné parmi les niveaux d'entrée), l'unité de pilotage effectue l'étape 217 dans laquelle elle génère pour l'élévateur d'entrée une mission de transfert de la charge sélectionnée sur l'entrée du niveau de destination sélectionné.

Si l'étape 211 n'a pas abouti, l'unité de pilotage effectue des étapes de test 213 et 214. Dans l'étape 213, elle détecte si le au moins un convoyeur de sortie (CS) est saturé. Dans l'étape 214, elle détecte si un emplacement de prise par l'élévateur de sortie est occupé par une charge possédant le prochain numéro d'ordre dans la liste d'attendus en sortie. Si les deux conditions des tests 213 et 214 sont vérifiées, l'unité de pilotage revient à l'étape initiale 201, sinon elle passe à une étape de test 215 dans laquelle elle détecte si le nombre maximal prédéterminé de niveau(x) à recirculer est atteint. Comme mentionné plus haut, dans un mode de réalisation particulier ce nombre maximal est égal à N, afin d'améliorer le pouvoir de tri des charges à recirculer et des charges en recirculation.

Si la condition du test 215 est vérifiée, l'unité de pilotage revient à l'étape initiale 201, sinon elle passe à une étape 216 de sélection d'un niveau à recirculer.

Dans l'étape 216, l'unité de pilotage sélectionne un niveau à recirculer parmi les niveaux d'entrée (sans génération pour l'élévateur d'entrée d'une mission de transfert de la charge sélectionnée sur l'entrée du niveau à recirculer sélectionné) et elle affecte à chaque charge du niveau à recirculer (hormis les charges ayant le statut « rebut ») un statut de charge à recirculer (signifiant que la charge doit être transférée par l'élévateur de sortie sur l'entrée du niveau de recirculation).

Dans un mode de réalisation particulier, l'étape 216 de sélection d'un niveau à recirculer comprend l'attribution d'une note à chacun des niveaux d'entrée, sauf le(s) niveaux d'entrée plein(s) dont le numéro d'ordre de la dernière charge placée est inférieur ou égal au numéro d'ordre de la charge sélectionnée, (avec un jeu de règles de notation détaillé ci-après) puis la sélection du niveau d'entrée ayant obtenu la note (positive) la plus élevée.

Dans une implémentation particulière, le jeu de règles de notation comprend, pour affecter une note à un niveau d'entrée donné (sans prendre en compte les charges en « rebut ») :

- initialisation de la note à zéro ;
- si les charges du niveau d'entrée donné peuvent, sur le niveau de recirculation, se mettre derrière les charges en recirculation en respectant un ordre croissant de numéros d'ordre, incrémentation de la note d'une valeur K1. On veut le plus possible que les charges sur le niveau de recirculation soient rangées dans un ordre croissant, donc si faire recirculer le niveau d'entrée donné permet de garder cette propriété vraie, cette incrémentation augmente les chances du niveau d'entrée donné d'être sélectionné en incrémentant sa note. Le choix d'ordre croissant sur le niveau de recirculation permet un replacement plus aisé des charges, de mieux trier et de ne jamais perdre de temps à devoir déplacer des charges (de numéro d'ordre plus grand que celui dont on aurait besoin) pour les replacer dans l'unité de stockage tampon US ;
- s'il est possible de réintroduire entièrement les charges du niveau d'entrée donné sur le niveau de recirculation, incrémentation de la note d'une valeur K2. Cette incrémentation favorise un niveau d'entrée qui n'oblige pas à faire recirculer les charges déjà présentes sur le niveau de recirculation vers un niveau d'entrée de l'unité de stockage tampon US ;
- si le niveau d'entrée donné ne comprend qu'une seule charge, incrémentation de la note d'une valeur K3. Cette incrémentation favorise une recirculation rapide ;
- incrémentation de la note avec le numéro d'ordre de la charge du niveau d'entrée donné la plus proche de l'élévateur de sortie ;
- décrémentation de la note avec m fois le nombre de charges sur le niveau d'entrée donné. Cette décrémentation permet de prendre en compte le temps nécessaire à la recirculation de toutes les charges présentes sur le niveau d'entrée donné ;

avec $2 \leq m \leq 10$ (par exemple m=2), K1 > Y, K2 > Y et K3 > Y, Y étant la capacité de charges de chaque niveau d'entrée (dans une implémentation particulière : K1 = K2 = K3 = 1 000 000).

La **figure 3** présente un organigramme du pilotage de l'élévateur de sortie par l'unité de pilotage UP, selon un mode de réalisation particulier de l'invention. C'est un pilotage itératif comprenant à chaque itération les étapes détaillées ci-après.

Dans une étape initiale 301, l'unité de pilotage détecte et identifie les charges éventuellement présentes sur les positions de prise par l'élévateur de sortie : positions de prise sur les sorties des niveaux d'entrée $VE_1$ à $VE_N$ et sur la sortie du niveau « voie rapide » VQ.

Dans une étape de test 302, l'unité de pilotage détecte si une charge ayant le prochain numéro d'ordre de la liste d'attendus en sortie est disponible pour prise, parmi les charges détectées à l'étape 301.

En cas de réponse positive à l'étape de test 302, l'unité de pilotage passe à l'étape de test 303 dans laquelle elle détecte si le convoyeur de sortie est saturé.

En cas de réponse négative à l'étape de test 303, l'unité de pilotage effectue les étapes 304 à 307 :

• dans l'étape 304, l'unité de pilotage sélectionne une charge ayant le prochain numéro d'ordre de la liste d'attendus en sortie 308 (s'il y a plusieurs charges possédant un tel numéro d'ordre, l'unité de pilotage sélectionne par exemple celle qui est la plus proche de la position de l'élévateur de sortie) ;
• dans l'étape 305, l'unité de pilotage génère, pour l'élévateur de sortie, une mission de prise de la charge sélectionnée ;
• dans l'étape 306, l'unité de pilotage génère, pour l'élévateur de sortie, une mission de dépose de la charge sélectionnée sur le convoyeur de sortie CS ;
• dans l'étape 307, l'unité de pilotage met à jour la liste d'attendus en sortie 308.

En cas de réponse négative à l'étape de test 302, ou de réponse positive à l'étape de test 303, l'unité de pilotage effectue une étape de test 309 dans laquelle elle détecte si une charge à recirculer est disponible pour prise, parmi les charges détectées à l'étape 301.

En cas de réponse positive à l'étape de test 309, l'unité de pilotage effectue les étapes 310 à 313 :

• dans l'étape 310, l'unité de pilotage sélectionne une charge à recirculer (s'il y en a plusieurs, l'unité de pilotage sélectionne par exemple celle qui a le numéro d'ordre le plus faible) ;
• dans l'étape 311, l'unité de pilotage génère, pour l'élévateur de sortie, une mission de prise de la charge à recirculer sélectionnée ;
• dans l'étape 312, l'unité de pilotage génère, pour l'élévateur de sortie, une mission de dépose de la charge à recirculer sélectionnée sur le niveau de recirculation VR ;

- dans l'étape 313, l'unité de pilotage met à jour les statuts. Elle enlève le statut « à recirculer » de la charge et lui affecte le statut « en recirculation ». Si suite à ce changement de statut de la charge, le niveau d'entrée sur lequel elle se trouvait n'a plus de charges « à recirculer », l'unité de pilotage enlève le statut « à recirculer » de ce niveau d'entrée.

En cas de réponse positive à l'étape de test 309, l'unité de pilotage revient à l'étape initiale 301.

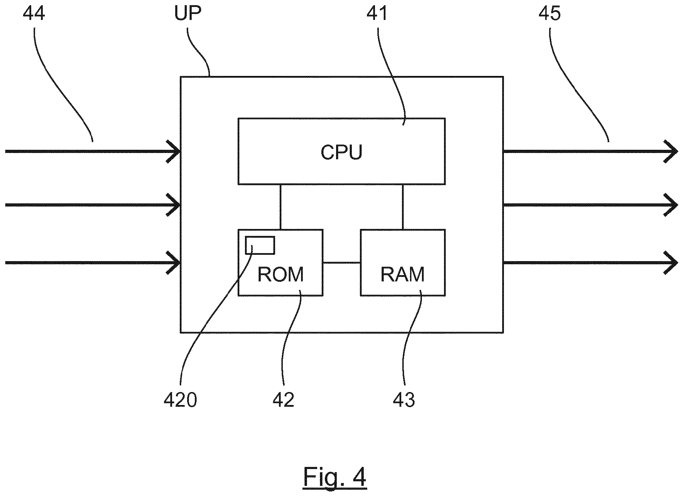

La **figure 4** présente un exemple de structure de l'unité de pilotage UP précitée, selon un mode de réalisation particulier de l'invention. L'unité de pilotage UP comprend une mémoire vive 43 (par exemple une mémoire RAM), une unité de traitement 41, équipée par exemple d'un processeur, et pilotée par un programme d'ordinateur 420 stocké dans une mémoire morte 42 (par exemple une mémoire ROM ou un disque dur). A l'initialisation, les instructions de code du programme d'ordinateur 420 sont par exemple chargées dans la mémoire vive 43 avant d'être exécutées par le processeur de l'unité de traitement 41. L'unité de traitement 41 reçoit des signaux d'entrée 44, les traite et génère des signaux de sortie 45.

Les signaux d'entrée 44 comprennent diverses informations relatives au fonctionnement du système global (comprenant notamment la (ou les) unité(s) externe(s), le système de stockage tampon et de séquencement et le(s) poste(s) de préparation), notamment les identifiants de charge lus (par des dispositifs de lecture de type lecteur code à barre, lecteur d'étiquette RFID, etc.) sur les charges quand elles passent à différents endroits du système global (par exemple aux extrémités des différents convoyeurs).

Les signaux de sortie 45 comprennent diverses informations de contrôle pour le pilotage (contrôle) des équipements du système global (notamment au sein du système de stockage tampon et de séquencement), afin de gérer les mouvements des charges dans le système global.

Cette figure 4 illustre seulement une implémentation particulière parmi plusieurs possibles. En effet, l'unité de pilotage UP se réalise indifféremment sur une machine de calcul reprogrammable (un ordinateur PC, un processeur DSP ou un microcontrôleur) exécutant un programme comprenant une séquence d'instructions, et/ou sur une machine de calcul dédiée (par exemple un ensemble de portes logiques comme un FPGA ou un ASIC, ou tout autre module matériel). Dans le cas où l'unité de pilotage est implantée au moins en partie sur une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de pilotage d'un système de stockage tampon et de séquencement de charges, configuré pour recevoir des charges non séquencées provenant d'au moins une unité externe, via au moins un convoyeur d'entrée (CE), et fournir au moins une séquence de charges dans un ordre voulu à au moins un poste de préparation (PP), via au moins un convoyeur de sortie (CS), le système comprenant :

   - une unité de stockage tampon (US) comprenant N niveaux d'entrée ($VE_1$ à $VE_N$) et au moins un niveau de recirculation (VR) superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec $N \geq 2$, une charge présente sur le au moins un niveau de recirculation étant dite charge en recirculation ; et
   - un élévateur d'entrée (EE) et un élévateur de sortie (ES), de type alternatif et discontinu, positionnés respectivement en regard des entrées et en regard des sorties des N niveaux d'entrée et du au moins un niveau de recirculation ;

   **caractérisé en ce qu'**une unité de pilotage (UP) effectue un pilotage itératif de l'élévateur d'entrée comprenant à chaque itération les étapes suivantes, même s'il existe au moins une charge à recirculer dans le système :

   - détection (201) d'une première charge sur une sortie du convoyeur d'entrée et d'une deuxième charge sur la sortie du au moins un niveau de recirculation ;
   - sélection (204 à 209), d'une charge avec les règles suivantes : sélection (206) de la première charge si pas de deuxième charge présente, ou inversement (209) ; si les première et deuxième charges sont présentes, sélection (209) de la deuxième charge si au moins une condition de priorité (207) est vérifiée, sinon sélection (206) de la première charge ;
   - sélection (211) d'un niveau de destination parmi les niveaux d'entrée, en respectant une règle selon laquelle des charges présentes sur un même niveau d'entrée, hormis d'éventuelle(s) charge(s) à recirculer, sont séquencées dans un ordre croissant de numéros d'ordre ;
- si la sélection d'un niveau de destination (211) aboutit, génération (217) pour l'élévateur d'entrée d'une mission de transfert de la charge sélectionnée sur l'entrée du niveau de destination sélectionné, sinon sélection (216) d'un niveau à recirculer parmi les niveaux d'entrée, sans génération pour l'élévateur d'entrée d'une mission de transfert de la charge sélectionnée sur l'entrée du niveau à recirculer sélectionné, et affectation à chaque charge du niveau à recirculer d'un statut de charge à recirculer signifiant que ladite charge doit être transférée par l'élévateur de sortie sur l'entrée du au moins un niveau de recirculation.

2. Procédé selon la revendication 1, **caractérisé en ce que** ladite au moins une condition de priorité (207) appartient au groupe comprenant :

- le numéro d'ordre de la deuxième charge est inférieur au numéro d'ordre de la première charge ;
- le au moins un niveau de recirculation comprend des charges en recirculation qui ne sont pas séquencées dans un ordre croissant de numéros d'ordre ;
- le au moins un niveau de recirculation est plein et il y a besoin d'une place pour y placer une charge ;
- il existe dans le système au moins une charge à recirculer ou en recirculation avec un numéro d'ordre inférieur au numéro d'ordre de la première charge ;
- il existe dans le système au moins une charge à recirculer avec un numéro d'ordre inférieur au numéro d'ordre de la dernière charge placée dans le au moins un niveau de recirculation.

3. Procédé selon l'une quelconque des revendications 1 et 2, **caractérisé en ce que**, si la deuxième charge est sélectionnée (209), le pilotage itératif de l'élévateur d'entrée comprend une étape de test (210) d'au moins une condition de tri, et **en ce que** :

- si ladite au moins une condition de tri (210) est vérifiée, une étape de mise en attente (212) de l'élévateur d'entrée est effectuée à la place de l'étape de sélection (211) d'un niveau de destination ;
- sinon, l'étape de sélection (211) d'un niveau de destination est effectuée.

4. Procédé selon la revendication 3, **caractérisé en ce que** ladite au moins une condition de tri (210) appartient au groupe comprenant :

- le numéro d'ordre de la deuxième charge est strictement supérieur au numéro d'ordre de la charge en $(N.Y/k)^{ème}$ place dans une liste d'attendus en sortie, avec N le nombre de niveaux d'entrée, Y la capacité de charges de chaque niveau d'entrée et $1/3 \leq k \leq 2/3$ ; et
- les charges en recirculation sur le au moins un niveau de recirculation sont séquencées dans un ordre croissant de numéros d'ordre.

5. Procédé selon l'une quelconque des revendications 1 à 4, **caractérisé en ce que** l'étape de sélection (211) d'un niveau de destination comprend :

- attribution d'une note à chacun des niveaux d'entrée, avec un jeu de règles de notation ; et
- sélection du niveau d'entrée ayant la note la plus élevée ;

et **en ce que** ledit jeu de règles de notation comprend, pour affecter une note à un niveau d'entrée donné :

- initialisation de la note à zéro ;
- si le niveau d'entrée donné est saturé, décrémentation de la note d'une valeur C0 ;
- si le niveau d'entrée donné est vide :

  * si la charge sélectionnée est une charge en recirculation, incrémentation de la note d'une valeur C1 ;
  * si le numéro d'ordre de la charge sélectionnée est strictement supérieur au numéro d'ordre de la charge en $(N.Y)^{ème}$ place dans une liste d'attendus en sortie, avec Y la capacité de charges de chaque niveau d'entrée, et que soit le au moins un niveau de recirculation est vide soit la dernière charge entrée dans le au moins un niveau de recirculation possède un numéro d'ordre inférieur ou égal au numéro d'ordre de la charge sélectionné, incrémentation de la note d'une valeur C2, sinon incrémentation de la note d'une valeur C3;

- si NumDerCharge ≤ NumCharge, avec NumDerCharge le numéro d'ordre de la dernière charge placée sur le niveau d'entrée donné et NumCharge le numéro d'ordre de la charge sélectionnée :

* si la différence, dans la liste d'attendus en sortie, entre la place i de la première charge ayant le numéro d'ordre NumCharge, et la place j de la première charge ayant le numéro d'ordre NumDerCharge, est strictement inférieure à Z, avec Z un nombre entier positif prédéterminé, incrémentation de la note d'une valeur C4 ;
* sinon incrémentation de la note d'une valeur C5 ;

- si la dernière charge placée sur le niveau d'entrée donné est une charge à recirculer, si le niveau d'entrée donné n'est pas vide, et si NumDerCharge > NumCharge, incrémentation de la note d'une valeur C6 ;
avec :

$$C1 < C3 < C2 \; ; C5 \leq C2 \; ; C5 < C4 \; ; C2 < C0 \; ; C4 < C0 \; ; C6 < C3.$$

**6.** Procédé selon la revendication 5, **caractérisé en ce que** :

-

$$C4 = C7 - (NumCharge - NumDerCharge) + Y \; ;$$

et

-

$$C5 = C8 - (NumCharge - NumDerCharge) \; ;$$

avec C7 > C8.

**7.** Procédé selon l'une quelconque des revendications 1 à 6, **caractérisé en ce que** si la sélection d'un niveau de destination (211) aboutit et si les conditions suivantes sont vérifiées :

- le niveau de destination sélectionné est vide ;
- le numéro d'ordre de la charge sélectionnée est strictement supérieur au numéro d'ordre de la charge en $(N.Y)^{ème}$ place dans une liste d'attendus en sortie, avec Y la capacité de charges de chaque niveau d'entrée ; et
- soit le au moins un niveau de recirculation est vide, soit la dernière charge placée sur le au moins un niveau de recirculation possède un numéro d'ordre inférieur au numéro d'ordre de la charge sélectionnée ;

alors le niveau de destination sélectionné prend le statut d'un niveau à recirculer et la charge sélectionnée prend le statut d'une charge à recirculer afin d'être transférée sur l'entrée du au moins un niveau de recirculation par l'élévateur de sortie.

**8.** Procédé selon l'une quelconque des revendications 1 à 7, l'unité de stockage tampon (US) comprenant en outre un niveau « voie rapide » (VQ), superposé verticalement avec les niveaux d'entrée ($VE_1$ à $VE_N$) et le au moins un niveau de recirculation (VR), ayant une entrée unique et une sortie unique, et comprenant un convoyeur de type « premier entré premier sorti » selon le premier sens,
**caractérisé en ce que**, si une des conditions suivantes est respectée, l'étape de sélection (211) d'un niveau de destination comprend une sélection du niveau « voie rapide » :

- le numéro d'ordre de la charge sélectionnée est celui du prochain numéro d'ordre d'une liste d'attendus en sortie ; et
- le numéro d'ordre de la charge sélectionnée est celui directement attendu après le numéro d'ordre de la dernière charge placée dans le niveau « voie rapide ».

**9.** Procédé selon l'une quelconque des revendications 1 à 8, **caractérisé en ce que** l'étape de sélection (216) d'un niveau à recirculer comprend :

- attribution d'une note à chacun des niveaux d'entrée, sauf le(s) niveaux d'entrée plein(s) dont le numéro d'ordre de la dernière charge placée est inférieur ou égal au numéro d'ordre de la charge sélectionnée, avec un jeu de règles de notation ; et
- sélection, comme niveau à recirculer, du niveau d'entrée ayant la note la plus élevée ;

et **en ce que** ledit jeu de règles de notation comprend, pour affecter une note à un niveau d'entrée donné :

- initialisation de la note à zéro ;
- si les charges du niveau d'entrée donné peuvent, sur le au moins un niveau de recirculation, se mettre derrière les charges en recirculation en respectant un ordre croissant de numéros d'ordre, incrémentation de la note d'une valeur K1 ;
- s'il est possible de réintroduire entièrement les charges du niveau d'entrée donné sur le au moins un niveau de recirculation, incrémentation de la note d'une valeur K2 ;
- si le niveau d'entrée donné ne comprend qu'une seule charge, incrémentation de la note d'une valeur K3 ;
- incrémentation de la note avec le numéro d'ordre de la charge du niveau d'entrée donné la plus proche de l'élévateur de sortie ;
- décrémentation de la note avec m fois le nombre de charges sur le niveau d'entrée donné ;

avec $2 \leq m \leq 10$, $K1 > Y$, $K2 > Y$ et $K3 > Y$, Y étant la capacité de charges de chaque niveau d'entrée.

10. Procédé selon la revendication 9, **caractérisé en ce que** : $K1 = K2 = K3$.

11. Procédé selon l'une quelconque des revendications 1 à 10, **caractérisé en ce que**, si la sélection d'un niveau de destination (211) n'aboutit pas, le pilotage itératif de l'élévateur d'entrée comprend un test des deux conditions suivantes :

- le au moins un convoyeur de sortie (CS) est saturé (213) ; et
- un emplacement de prise par l'élévateur de sortie est occupé par une charge possédant le prochain numéro d'ordre d'une liste d'attendus en sortie (214) ;

et **en ce que** l'étape de sélection (216) d'un niveau à recirculer n'est pas effectuée si les deux conditions (213, 214) sont vérifiées, et est effectuée sinon.

12. Procédé selon l'une quelconque des revendications 1 à 11, **caractérisé en ce que**, si la sélection d'un niveau de destination (211) n'aboutit pas, le pilotage itératif de l'élévateur d'entrée comprend un test de la condition supplémentaire suivante :

- un nombre maximal prédéterminé de niveau(x) à recirculer est atteint (215) ;

et **en ce que** l'étape de sélection (216) d'un niveau à recirculer n'est pas effectuée si ladite condition supplémentaire (215) est vérifiée, et est effectuée sinon.

13. Procédé selon la revendication 12, **caractérisé en ce que** le nombre maximal prédéterminé de niveau(x) à recirculer est égal au nombre N de niveaux d'entrée.

14. Produit programme d'ordinateur, comprenant des instructions de code de programme pour la mise en oeuvre du procédé selon au moins une des revendications 1 à 13, lorsque ledit programme est exécuté sur un ordinateur.

15. Médium de stockage lisible par ordinateur et non transitoire, stockant un produit programme d'ordinateur selon la revendication 14.

16. Unité de pilotage (UP) d'un système de stockage tampon et de séquencement de charges, configuré pour recevoir des charges non séquencées provenant d'au moins une unité externe, via au moins un convoyeur d'entrée (CE), et fournir au moins une séquence de charges dans un ordre voulu à au moins un poste de préparation (PP), via au moins un convoyeur de sortie (CS), le système comprenant :

- une unité de stockage tampon (US) comprenant N niveaux d'entrée ($VE_1$ à $VE_N$) et au moins un niveau de recirculation (VR) superposés verticalement, ayant chacun une entrée unique et une sortie unique, et comprenant chacun un convoyeur de type « premier entré premier sorti » selon un premier sens pour les niveaux d'entrée et selon un deuxième sens opposé au premier sens pour le au moins un niveau de recirculation, avec N≥2, une charge présente sur le au moins un niveau de recirculation étant dite charge en recirculation ; et
- un élévateur d'entrée (EE) et un élévateur de sortie (ES), de type alternatif et discontinu, positionnés respectivement en regard des entrées et en regard des sorties des N niveaux d'entrée et du au moins un niveau de recirculation ;

**caractérisé en ce que** ladite unité de pilotage (UP) est configurée pour effectuer un pilotage itératif de l'élévateur d'entrée selon le procédé de pilotage selon l'une quelconque des revendications 1 à 13.

**Patentansprüche**

1. Verfahren zum Steuern eines Pufferlager- und Sequenzierungssystems von Lasten, das konfiguriert ist, um nichtsequenzierte Lasten, die von mindestens einer externen Einheit stammen, über mindestens einen Eingangsförderer (CE) zu empfangen und mindestens eine Sequenz von Lasten in einer gewünschten Reihenfolge mindestens einer Vorbereitungsstation (PP) über mindestens einen Ausgangsförderer (CS) bereitzustellen, wobei das System aufweist:

   - eine Pufferlagereinheit (US), umfassend N Eingangsebenen ($VE_1$ bis $VE_N$) und mindestens eine Rückführebene (VR), die vertikal übereinander angeordnet sind, die jeweils einen einzigen Eingang und einen einzigen Ausgang aufweisen, und jeweils einen Förderer vom Typ "First In - First Out" in einer ersten Richtung für die Eingangsebenen und in einer zweiten Richtung, die entgegengesetzt zur ersten Richtung ist, für die mindestens eine Rückführebene aufweisen, wobei N>_2 ist, wobei eine Last, die auf der mindestens einen Rückführebene vorhanden ist, Rückführlast genannt wird, und
   - einen Eingangsheber (EE) und einen Ausgangsheber (ES) vom alternierenden und diskontinuierlichen Typ, die jeweils gegenüber den Eingängen und gegenüber den Ausgängen der N Eingangsebenen und der mindestens einen Rückführebene angeordnet sind,

   **dadurch gekennzeichnet, dass** eine Steuereinheit (UP) eine iterative Steuerung des Eingangshebers durchführt, die bei jeder Iteration die folgenden Schritte aufweist, selbst wenn es mindestens eine Last gibt, die in dem System zurückzuführen ist:

   - Erfassen (201) einer ersten Last an einem Ausgang des Eingangsförderers und einer zweiten Last am Ausgang der mindestens einen Rückführebene,
   - Auswählen (204 bis 209) einer Last mit den folgenden Regeln: Auswählen (206) der ersten Last, wenn keine zweite Last vorhanden ist oder umgekehrt (209); wenn die erste und die zweite Last vorhanden sind, Auswählen (209) der zweiten Last, wenn mindestens eine Prioritätsbedingung (207) erfüllt ist, anderenfalls Auswählen (206) der ersten Last,
   - Auswählen (211) einer Bestimmungsebene aus den Eingangsebenen unter Beachtung einer Regel, nach der Lasten, die auf derselben Eingangsebene vorhanden sind, abgesehen von einer etwaigen Last (von etwaigen Lasten), die zurückzuführen ist (sind), in einer aufsteigenden Reihenfolge von laufenden Nummern sequenziert werden,
   - wenn das Auswählen einer Zielebene (211) erfolgreich ist, Generieren (217) für den Eingangsheber eines Auftrags zum Transferieren der ausgewählten Last an den Eingang der ausgewählten Zielebene, andernfalls Auswählen (216) einer Rückführebene aus den Eingangsebenen, ohne Generieren für den Eingangsheber eines Auftrags zum Transferieren der ausgewählten Last an den Eingang der ausgewählten Rückführebene und Zuordnen zu jeder Last der Rückführbene eines Zustands der zurückzuführenden Last, was bedeutet, dass die Last vom Ausgangsheber an den Eingang der mindestens einen Rückführebene transferiert werden muss.

2. Verfahren nach Anspruch 1, **dadurch gekennzeichnet, dass** die mindestens eine Prioritätsbedingung (207) zu der Gruppe gehört, umfassend:

   - die laufende Nummer der zweiten Last ist niedriger als die laufende Nummer der ersten Last,
   - die mindestens eine Rückführebene weist Lasten auf, die zurückgeführt werden, die nicht in einer aufsteigenden Reihenfolge von laufenden Nummern sequenziert werden,
   - die mindestens eine Rückführebene ist voll und ein Platz ist erforderlich, um dort eine Last zu platzieren,
   - im System gibt es mindestens eine Last, die zurückzuführen ist oder zurückgeführt wird, mit einer laufenden Nummer, die niedriger ist als die laufende Nummer der ersten Last,
- im System gibt es mindestens eine Last, die zurückzuführen ist, mit einer laufenden Nummer, die niedriger ist als die laufende Nummer der letzten Last, die auf die mindestens eine Rückführebene platziert wird.

3. Verfahren nach einem der Ansprüche 1 und 2, **dadurch gekennzeichnet, dass**, wenn die zweite Last ausgewählt wird (209), die iterative Steuerung des Eingangshebers einen Testschritt (210) von mindestens einer Sortierbedingung aufweist, und dadurch, dass:

- wenn die mindestens eine Sortierbedingung (210) erfüllt ist, ein Schritt des in die Warteschlange Stellens (212) des Eingangshebers anstelle des Schritts des Auswählens (211) einer Zielebene durchgeführt wird,
- andernfalls der Schritt des Auswählens (211) einer Zielebene durchgeführt wird.

4. Verfahren nach Anspruch 3, **dadurch gekennzeichnet, dass** die mindestens eine Sortierbedingung (210) zu der Gruppe gehört, umfassend:

- die laufende Nummer der zweiten Last ist strikt größer als die laufende Nummer der Last an (N.Y/k)$^{-\text{ter}}$ Stelle in einer Ausgangswarteliste, wobei N die Anzahl der Eingangsebenen, Y die Lastenkapazität jeder Eingangsebene und $1/3 \leq k \leq 2/3$ ist, und
- die Lasten, die zurückgeführt werden, auf der mindestens einen Rückführebene in einer aufsteigenden Reihenfolge von laufenden Nummern sequenziert werden.

5. Verfahren nach einem der Ansprüche 1 bis 4, **dadurch gekennzeichnet, dass** der Schritt des Auswählens (211) einer Zielebene aufweist:

- Vergeben von einer Note an jede der Eingangsebenen mit einem Satz von Benotungsregeln und
- Auswählen der Eingangsebene mit der höchsten Note,

und dadurch, dass der Satz von Benotungsregeln zum Zuweisen einer Note an eine bestimmte Eingangsebene aufweist:

- Initialisieren der Note bei Null,
- wenn die bestimmte Eingangsebene gesättigt ist, Dekrementieren der Note um einen Wert C0,
- wenn die bestimmte Eingangsebene leer ist:

   * wenn die ausgewählte Last eine Rückführlast ist, Inkrementieren der Note um einen Wert C1,
   * wenn die laufende Nummer der ausgewählten Last strikt größer als die laufende Nummer der Last an (N.Y)-ter Stelle in einer Ausgangswarteliste ist, wobei Y die Lastenkapazität jeder Eingangsebene ist, und entweder die mindestens eine Rückführebene leer ist oder die letzte Last, die in die mindestens eine Rückführebene eingetreten ist, eine laufende Nummer besitzt, die kleiner oder gleich der laufenden Nummer der ausgewählten Last ist, Inkrementieren der Note um einen Wert C2, anderenfalls Inkrementieren der Note um einen Wert C3,

- wenn NumDerCharge≤NumCharge, wobei NumDerCharge die laufende Nummer der letzte Last ist, die auf der bestimmten Eingangsebene platziert ist, und NumCharge die laufende Nummer ausgewählten Last ist:

   * wenn die Differenz in der Ausgangswarteliste zwischen dem Platz i der ersten Last mit der laufenden Nummer NumCharge und dem Platz j der ersten Last mit der laufenden Nummer NumDerCharge strikt kleiner als Z ist, wobei Z eine vorbestimmte positive ganze Zahl ist, Inkrementieren der Note um einen Wert C4,
   * anderenfalls Inkrementieren der Note um einen Wert C5,

- wenn die letzte ausgewählte Last, die auf der bestimmten Eingangsebene platziert ist, eine Rückführlast ist, wenn die bestimmte Eingangsebene nicht leer ist und wenn NumDerCharge > NumCharge ist, Inkrementieren der Note um einen Wert C6,

mit:

$$Cl < C3 < C2; C5 \; C2; C5 < C4; C2 < CO; C4 < CO; C6 < C3.$$

6. Verfahren nach Anspruch 5, **dadurch gekennzeichnet, dass**:

   -

$$C4 = C7 - (NumCharge - NumDerCharge) + Y$$

   und

   -

$$C5 = C8 - (NumCharge - NumDerCharge),$$

   mit $C7 > C8$.

7. Verfahren nach einem der Ansprüche 1 bis 6, **dadurch gekennzeichnet, dass**, wenn das Auswählen einer Zielebene (211) erfolgreich ist und wenn die folgenden Bedingungen erfüllt werden:

   - die ausgewählte Zielebene ist leer,
   - die laufende Nummer der ausgewählten Last ist strikt größer als die laufende Nummer der Last an $(N.Y)^{-ter}$ Stelle in einer Ausgangswarteliste, wobei Y die Lastenkapazität jeder Eingangsebene ist, und
   - entweder die mindestens eine Rückführebene ist leer oder die letzte Last, die auf die mindestens eine Rückführebene platziert ist, besitzt eine laufende Nummer, die kleiner als die laufende Nummer der ausgewählten Last ist,

   dann nimmt die ausgewählte Zielebene den Zustand einer Rückführebene an und die ausgewählte Last nimmt den Zustand einer zurückzuführenden Last an, um vom Ausgangsheber an den Eingang der mindestens einen Rückführebene transferiert zu werden.

8. Verfahren nach einem der Ansprüche 1 bei 7, wobei die Pufferlagereinheit (US) ferner eine Ebene "schneller Weg" (VQ) aufweist, die vertikal über den Eingangsebenen (VE1 bis V) und der mindestens einen Rückführebene (VR) angeordnet ist, die einen einzigen Eingang und einen einzigen Ausgang aufweist, und einen Förderer vom Typ "First In - First Out" in der ersten Richtung aufweist, **dadurch gekennzeichnet, dass**, wenn eine der folgenden Bedingungen erfüllt ist, der Schritt des Auswählens (211) einer Zielebene ein Auswählen der Ebene "schneller Weg" aufweist:

   - die laufende Nummer der ausgewählten Last ist jene der nächsten laufenden Nummer einer Ausgangswarteliste und
   - die laufende Nummer der ausgewählten Last ist jene, die direkt nach der laufenden Nummer der letzten Last erwartet wird, die auf der Ebene "schneller Weg" platziert wird.

9. Verfahren nach einem der Ansprüche 1 bis 8, **dadurch gekennzeichnet, dass** der Schritt des Auswählens (216) einer Rückführebene aufweist:

   - Vergeben von einer Note an jede der Eingangsebenen, mit Ausnahme der vollen Eingangsebene(n), deren laufende Nummer der letzten platzierten Last kleiner oder gleich der laufenden Nummer der ausgewählten Last ist, mit einem Satz von Benotungsregeln und
   - Auswählen der Eingangsebene mit der höchsten Note als Rückführebene, und dadurch, dass der Satz von Benotungsregeln zum Zuweisen einer Note an eine bestimmte Eingangsebene aufweist:
   - Initialisieren der Note bei Null,
   - wenn die Lasten der bestimmten Eingangsebene auf der mindestens einen Rückführebene hinter die Lasten, die zurückgeführt werden, unter Einhaltung einer aufsteigenden Reihenfolge von laufenden Nummern gestellt werden können, Inkrementieren der Note um einen Wert K1,
   - wenn es möglich ist, die Lasten der bestimmten Eingangsebene auf der mindestens einen Rückführebene vollständig wieder einzuführen, Inkrementieren der Note um einen Wert K2,

- wenn die bestimmte Eingangsebene nur eine Last aufweist, Inkrementieren der Note um einen Wert K3,
- Inkrementieren der Note mit der laufenden Nummer der Last der bestimmten Eingangsebene, die dem Ausgangsheber am nächsten ist,
- Dekrementieren der Note um einmal die Anzahl der Lasten auf der bestimmten Eingangsebene,

mit $2 \leq m \leq 10$, $K1 > Y$, $K2 > Y$ und $K3 > Y$, wobei Y die Lastenkapazität jeder Eingangsebene ist.

10. Verfahren nach Anspruch 9, **dadurch gekennzeichnet, dass**: K1 = K2 = K3.

11. Verfahren nach einem der Ansprüche 1 bis 10, **dadurch gekennzeichnet, dass**, wenn das Auswählen einer Zielebene (211) nicht erfolgreich ist, die iterative Steuerung des Eingangshebers einen Test der folgenden zwei Bedingungen aufweist:

- der mindestens eine Ausgangsförderer (CS) ist gesättigt (213) und
- eine Aufnahmestelle durch den Ausgangsheber wird von einer Last besetzt, die die nächste laufende Nummer einer Ausgangswarteliste (214) besitzt,

und dadurch, dass der Schritt des Auswählens (216) einer Rückführebene nicht durchgeführt wird, wenn die zwei Bedingungen (213, 214) erfüllt werden und ansonsten durchgeführt wird.

12. Verfahren nach einem der Ansprüche 1 bis 11, **dadurch gekennzeichnet, dass**, wenn das Auswählen einer Zielebene (211) nicht erfolgreich ist, die iterative Steuerung des Eingangshebers einen Test der folgenden zusätzlichen Bedingung aufweist:

- eine vorbestimmte maximale Anzahl an Rückführebenen wird erreicht (215), und dadurch, dass der Schritt des Auswählens (216) einer Rückführebene nicht durchgeführt wird, wenn die zusätzliche Bedingung (215) erfüllt wird und ansonsten durchgeführt wird.

13. Verfahren nach Anspruch 12, **dadurch gekennzeichnet, dass** die vorbestimmte maximale Anzahl an Rückführebenen gleich der Anzahl N an Eingangsebenen ist.

14. Computerprogrammprodukt, das Programmcodeanweisungen für das Umsetzen des Verfahrens nach mindestens einem der Ansprüche 1 bis 13 aufweist, wenn das Programm auf einem Computer ausgeführt wird.

15. Computerlesbares und nicht-transitorisches Aufzeichnungsmedium, das ein Computerprogrammprodukt nach Anspruch 14 speichert.

16. Einheit zum Steuern (UP) eines Pufferlager- und Sequenzierungssystems von Lasten, das konfiguriert ist, um nichtsequenzierte Lasten, die von mindestens einer externen Einheit stammen, über mindestens einen Eingangsförderer (CE) zu empfangen und mindestens eine Sequenz von Lasten in einer gewünschten Reihenfolge mindestens einer Vorbereitungsstation (PP) über mindestens einen Ausgangsförderer (CS) bereitzustellen, wobei das System aufweist:

- eine Pufferlagereinheit (US), umfassend N Eingangsebenen ($VE_1$ bis $VE_N$) und mindestens eine Rückführebene (VR), die vertikal übereinander angeordnet sind, die jeweils einen einzigen Eingang und einen einzigen Ausgang aufweisen, und jeweils einen Förderer vom Typ "First In - First Out" in einer ersten Richtung für die Eingangsebenen und in einer zweiten Richtung, die entgegengesetzt zur ersten Richtung ist, für die mindestens eine Rückführebene aufweisen, wobei N>_2 ist, wobei eine Last, die auf der mindestens einen Rückführebene vorhanden ist, Rückführlast genannt wird, und
- einen Eingangsheber (EE) und einen Ausgangsheber (ES) vom alternierenden und diskontinuierlichen Typ, die jeweils gegenüber den Eingängen und gegenüber den Ausgängen der N Eingangsebenen und der mindestens einen Rückführebene angeordnet sind,

**dadurch gekennzeichnet, dass** die Steuereinheit (UP) konfiguriert ist, um eine iterative Steuerung des Eingangshebers nach dem Verfahren nach einem der Ansprüche 1 bis 13 durchzuführen.

**Claims**

1. Method for controlling a system for buffer storage and load sequencing, configured to receive non-sequenced loads coming from at least one external unit, via at least one infeed conveyor (CE), and provide at least one sequence of loads in a desired order to at least one preparation station (PP), via at least one outfeed conveyor (CS), the system comprising:

   - a buffer storage unit (US) comprising N infeed levels ($VE_1$ to $VE_N$) and at least one recirculation level (VR) vertically superimposed, each having a single infeed and a single outfeed, and each comprising a conveyor of the "first-in first-out" type in a first direction for the infeed levels and in a second direction opposite to the first direction for the at least one recirculation level, with $N \geq 2$, a load present on the at least one recirculation level being called load in recirculation; and
   - an infeed elevator (EE) and an outfeed elevator (ES), of the alternating and discontinuous type, respectively positioned facing the infeeds and facing the outfeeds of the N infeed levels and of the at least one recirculation level;

   **characterised in that** a control unit (UP) carries out an iterative control of the infeed elevator comprising at each iteration the following steps, even if there is at least one load to be recirculated in the system:

   - detecting (201) a first load on an outfeed of the infeed conveyor and a second load on the outfeed of the at least one recirculation level;
   - selecting (204 to 209) a load with the following rules: selecting (206) the first load if no second load present, or vice versa (209); if the first and second load are present, selecting (209) the second load if at least one priority condition (207) is verified, otherwise selecting (206) the first load;
   - selecting (211) a destination level out of the infeed levels, while respecting a rule according to which loads present on the same infeed level, except for possible load(s) to be recirculated, are sequenced in an increasing order by number;
   - if the selection of a destination level (211) is successful, generating (217) for the infeed elevator a mission of transferring the selected load to the infeed of the selected destination level, otherwise selecting (216) a level to be recirculated out of the infeed levels, without generating for the infeed elevator a mission of transferring the selected load to the infeed of the selected level to be recirculated, and assigning to each load of the level to be recirculated a status of load to be recirculated meaning that said load must be transferred by the outfeed elevator to the infeed of the at least one recirculation level.

2. Method according to claim 1, **characterised in that** said at least one priority condition (207) belongs to the group comprising:

   - the number of the second load is lower than the number of the first load;
   - the at least one recirculation level comprises loads in recirculation that are not sequenced in an increasing order by number;
   - the at least one recirculation level is full and a spot is needed to place a load therein;
   - there is in the system at least one load to be recirculated or in recirculation with a number lower than the number of the first load;
   - there is in the system at least one load to be recirculated with a number lower than the number of the last load placed in the at least one recirculation level.

3. Method according to any one of claims 1 and 2, **characterised in that**, if the second load is selected (209), the iterative control of the infeed elevator comprises a step (210) of testing at least one sorting condition, and **in that**:

   - if said at least one sorting condition (210) is verified, a step (212) of placing the infeed elevator on standby is carried out instead of the step (211) of selecting a destination level;
   - otherwise, the step (211) of selecting a destination level is carried out.

4. Method according to claim 3, **characterised in that** said at least one sorting condition (210) belongs to the group comprising:

   - the number of the second load is strictly higher than the number of the load in $(N.Y/k)^{th}$ place in a list of expected outfeeds, with N the number of infeed levels, Y the load capacity of each infeed level and $1/3 \leq k \leq 2/3$; and

- the loads in recirculation on the at least one recirculation level are sequenced in an increasing order by number.

5. Method according to any one of claims 1 to 4, **characterised in that** the step (211) of selecting a destination level comprises:

- assigning a score to each of the infeed levels, with a set of scoring rules; and
- selecting the infeed level having the highest score;

and **in that** said set of scoring rules comprises, to assign a score to a given infeed level:

- initialising the score to zero;
- if the given infeed level is saturated, decrementing the score by a value C0;
- if the given infeed level is empty:

* if the selected load is a load in recirculation, incrementing the score by a value C1;
* if the number of the selected load is strictly higher than the number of the load in $(N.Y)^{th}$ place in a list of expected outfeeds, with Y the load capacity of each infeed level, and either the at least one recirculation level is empty or the last load that entered the at least one recirculation level has a number lower than or equal to the number of the selected load, incrementing the score by a value C2, otherwise incrementing the score by a value C3;

- if NumDerCharge $\leq$ NumCharge, with NumDerCharge the number of the last load placed on the given infeed level and NumCharge the number of the selected load:

* if the difference, in the list of expected outfeeds, between the place i of the first load having the number NumCharge and the place j of the first load having the number NumDerCharge is strictly less than Z, with Z a predetermined positive integer, incrementing the score by a value C4;
* otherwise incrementing the score by a value C5;

- if the last load placed on the given infeed level is a load to be recirculated, if the given infeed level is not empty, and if NumDerCharge > NumCharge, incrementing the score by a value C6;
with:

$$C1 < C3 < C2; C5 \leq C2; C5 < C4; C2 < C0; C4 < C0; C6 < C3.$$

6. Method according to claim 5, **characterised in that**

-

$$C4 = C7 - (NumCharge - NumDerCharge) + Y;$$

and

-

$$C5 = C8 - (NumCharge - NumDerCharge);$$

with C7 > C8.

7. Method according to any one of claims 1 to 6, **characterised in that** if the selection of a destination level (211) is successful and if the following conditions are verified:

- the selected destination level is empty;
- the number of the selected load is strictly higher than the number of the load in $(N.Y)^{th}$ place in a list of expected outfeeds, with Y the load capacity of each infeed level; and
- either the at least one recirculation level is empty, or the last load placed on the at least one recirculation level has a number lower than the number of the selected load;

then the selected destination level takes on the status of a level to be recirculated and the selected load takes on the status of a load to be recirculated in order to be transferred to the infeed of the at least one recirculation level by the outfeed elevator.

8. Method according to any one of claims 1 to 7, the buffer storage unit (US) further comprising a "fast lane" level (VQ), vertically superimposed with the infeed levels ($VE_1$ to $VE_N$) and the at least one recirculation level (VR), having a single infeed and a single outfeed, and comprising a conveyor of the "first in first out" type in the first direction, **characterised in that**, if one of the following conditions is respected, the step (211) of selecting a destination level comprises a selection of the "fast lane" level:

- the number of the selected load is that of the next number in a list of expected outfeeds; and
- the number of the selected load is that directly expected after the number of the last load placed in the "fast lane" level.

9. Method according to any one of claims 1 to 8, **characterised in that** the step (216) of selecting a level to be recirculated comprises:

- assigning a score to each of the infeed levels, except for the full infeed level(s) for which the number of the last load placed is lower than or equal to the number of the selected load, with a set of scoring rules; and
- selecting, as a level to be recirculated, the infeed level having the highest score;

and **in that** said set of scoring rules comprises, to assign a score to a given infeed level:

- initialising the score to zero;
- if the loads of the given infeed level can, on the at least one recirculation level, be placed behind the loads in recirculation while respecting an increasing order by number, incrementing the score by a value K1;
- if it is possible to entirely reintroduce the loads of the given infeed level on the at least one recirculation level, incrementing the score by a value K2;
- if the given infeed level only comprises a single load, incrementing the score by a value K3;
- incrementing the score with the number of the load of the given infeed level closest to the outfeed elevator;
- decrementing the score with m times the number of loads on the given infeed level;

with $2 \leq m \leq 10$, K1 > Y, K2 > Y and K3 > Y, Y being the load capacity of each infeed level.

10. Method according to claim 9, **characterised in that**: K1 = K2 = K3.

11. Method according to any one of claims 1 to 10, **characterised in that**, if the selection of a destination level (211) is not successful, the iterative control of the infeed elevator comprises a test of the following two conditions:

- the at least one outfeed conveyor (CS) is saturated (213); and
- a location for being taken by the outfeed elevator is occupied by a load having the next number in a list of expected outfeeds (214);

and **in that** the step (216) of selecting a level to be recirculated is not carried out if the two conditions (213, 214) are verified, and is carried out if not.

12. Method according to any one of claims 1 to 11, **characterised in that**, if the selection of a destination level (211) is not successful, the iterative control of the infeed elevator comprises a test of the following additional condition:

- a predetermined maximum number of level(s) to be recirculated is reached (215);

and **in that** the step (216) of selecting a level to be recirculated is not carried out if said additional condition (215) is verified, and is carried out if not.

13. Method according to claim 12, **characterised in that** the predetermined maximum number of level(s) to be recirculated is equal to the number N of infeed levels.

14. Computer program product, comprising program code instructions for implementing the method according to at least one of claims 1 to 13, when said program is executed on a computer.

15. Storage medium readable by computer and non-transient, storing a computer program product according to claim 14.

16. Unit (UP) for controlling a system for buffer storage and load sequencing, configured to receive non-sequenced loads coming from at least one external unit, via at least one infeed conveyor (CE), and provide at least one sequence of loads in a desired order to at least one preparation station (PP), via at least one outfeed conveyor (CS), the system comprising:

- a buffer storage unit (US) comprising N infeed levels ($VE_1$ to $VE_N$) and at least one recirculation level (VR) vertically superimposed, each having a single infeed and a single outfeed, and each comprising a conveyor of the "first in first out" type in a first direction for the infeed levels and in a second direction opposite to the first direction for the at least one recirculation level, with $N \geq 2$, a load present on the at least one recirculation level being called load in recirculation; and
- an infeed elevator (EE) and an outfeed elevator (ES), of the alternating and discontinuous type, respectively positioned facing the infeeds and facing the outfeeds of the N infeed levels and of the at least one recirculation level;

**characterised in that** said control unit (UP) is configured to carry out an iterative control of the infeed elevator according to the control method according to any one of claims 1 to 13.

Fig. 1

201 — Identification des charges en entrée et recirculation

202 — N° d'ordre ok ? — Non OK → 203 — Charge en rebut

OK

204 — Charge sur le conv d'entrée ? — NON → 208 — Charge à prendre en recirculation ? — NON → 212 — Attente au niveau du conv d'entrée

OUI (204)

OUI (208)

205 — Charge à prendre en recirculation ? — NON (vers 206)

209 — Sélection de la charge en recirculation

OUI (205)

206 — Sélection de la charge sur le conv d'entrée ← NON — 207 — Conditions de sélection tri remplies ? — OUI

210 — Contrôle tri OK ? — OUI / NON

211 — Sélection du meilleur niveau de destination

Pas de résultat / Niveau trouvé

213 — Conv sortie saturé ? — OUI

217 — Missions de prise / dépose au niveau sélectionné

NON

214 — N° attendu sur emplacements de prise ? — OUI

NON

215 — Nbe max de niv à recirculer atteint ? — OUI / NON → 216 — Choix du niveau à recirculer

Fig. 2

**301**

Identification des charges sur les emplacements de prise

**302**

Prochain n° attendu dispo pour prise ?

NON → **309**

Charge à recirculer dispo pour prise ?

NON →

OUI ↓

**310**

Sélection charge "à recirculer"

**311**

Mission de prise de la charge

**312**

Mission de dépose sur le niveau de recirculation

**313**

Mise à jour des statuts

OUI ↓

**303**

Conv sortie saturé ?

OUI

NON →

**304**

Sélection charge du prochain n° attendu en sortie

**305**

Mission de prise de la charge

**306**

Mission de dépose sur le convoyeur de sortie

**307**

Mise à jour de la liste des attendus en sortie

**308**

Liste des attendus en sortie

Fig. 3

Fig. 4

**EP 3 648 025 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051948 A1